# EUROPÄISCHE PATENTANMELDUNG

(11) **EP 1 710 031 A1**
(43) Veröffentlichungstag der Anmeldung: **11.10.2006**
(21) Anmeldenummer: 05006478.1
(22) Anmeldetag: 24.03.2005
(51) Int. Cl.: B23B 5/28, B23B 5/32

(54) **Maschine zum Reprofilieren der Räder und/oder Bremsscheiben von Radsätzen für Eisenbahnfahrzeuge**

(71) Anmelder: Hegenscheidt-MFD GmbH & Co. KG, 41812 Erkelenz (DE)
(72) Erfinder: Naumann Hans,J. Dr., Albany, NY 12204 (US)
(74) Vertreter: Cohausz & Florack

(57) **Zusammenfassung**

Die mobile Radsatzbearbeitungsmaschine (1) zum Reprofilieren der Räder und/oder Bremsscheiben von Radsätzen für Eisenbahnfahrzeuge hat einen Rahmen (2), der auf Rädern (3) oder Rollen gelagert ist, die in einem Werkstattgleis (4) geführt sind, wodurch die mobile Radsatzbearbeitungsmaschine (1) verschieb- und arretierbar ist. Unterflur des Werkstattgleises (4) ist eine Grube (5) eingelassen, deren Länge, Breite und Tiefe größer sind als die entsprechenden Abmessungen der mobilen Radsatzbearbeitungsmaschine (1). Auf dem Grunde der Grube (5) ist ein zweites Gleis (6) vorgesehen, auf welches die mobile Radsatzbearbeitungsmaschine (1) absenkbar ist. Einrichtungen (7) zum Überrollen durch das Eisenbahnfahrzeug sind ebenfalls vorgesehen, die sich längs des Werkstattgleises (4) über der Grube (5) erstrecken, wobei die Einrichtungen (7) entfernbar und wieder einsetzbar sind.

## Beschreibung

Die Neuerung betrifft eine mobile Radsatzbearbeitungsmaschine zum Reprofilieren der Räder und/oder Bremsscheiben von Radsätzen für Eisenbahnfahrzeuge, die einen Rahmen hat, der auf Rädern oder Rollen gelagert ist, die in einem Werkstattgleis geführt sind, wodurch die mobile Radsatzbearbeitungsmaschine längs des Werkstattgleises verschieb- und arretierbar ist.

Eine mobile Radsatzbearbeitungsmaschine zum Bearbeiten von Rädern von Eisenbahnradsätzen ist beispielsweise bekannt aus der DE 100 25 724 A1 der Anmelderin. Hierbei handelt es sich um ein Gerät, das auf Rollen oder Rädern gelagert ist und überflur unter ein aufgeständertes Eisenbahnfahrzeug bewegt werden kann. Einmal in die richtige Position gebracht, wird sodann mit Hilfe der mobilen Radsatzbearbeitungsmaschine die Reprofilierung an den Radsätzen beziehungsweise deren Rädern vorgenommen. Für die Verwendung der bekannten mobilen Radsatzbearbeitungsmaschine ist es somit erforderlich, dass das Eisenbahnfahrzeug, dessen Radsätze reprofiliert werden sollen, vorab durch Aufständerung auf eine entsprechende Höhe gebracht wird, so dass die mobile Radsatzbearbeitungsmaschine unter das Eisenbahnfahrzeug geschoben werden kann.

Das Aufständern von schweren Eisenbahnfahrzeugen, wie beispielsweise Lokomotiven, verlangt entsprechend schwere Ständer, die nicht immer in jeder Eisenbahnwerkstatt vorhanden sind. Auch bereitet das Aufständern von ganzen Eisenbahnzügen Schwierigkeiten, die aus mehreren einzelnen Eisenbahnfahrzeugen bestehen, welche untrennbar miteinander gekuppelt sind.

Die vorliegende Neuerung versucht hier Abhilfe zu schaffen, indem einerseits vom Vorteil einer mobilen Radsatzbearbeitungsmaschine Gebrauch machend, dieses Gerät andererseits auch unterflur einsetzbar gemacht werden soll, wie das von den klassischen Unterflurradsatzdrehmaschinen her bekannt ist.

Aus dem deutschen GM 202 14 918.1 ist ein "Service-Container" bekannt, der mit der eingangs genannten mobilen Radsatzbearbeitungsmaschine kuppelbar ist. In dem Service-Container befinden sich Einrichtungen zur Steuerung, zur Energieversorgung sowie zum Absaugen und Entfernen von Abfallstoffen und auch Handwerkzeuge, wie sie zum Betrieb der mobilen Radsatzbearbeitungsmaschine unerlässlich sind. Ebenso wie die bekannte mobile Radsatzbearbeitungsmaschine ist auch der Service-Container auf Rollen gelagert, die sich zusammen mit der mobilen Radsatzbearbeitungsmaschine im Werkstattgleis bewegen können.

Im vorliegenden Fall ist vorgesehen, dass die mobile Radsatzbearbeitungsmaschine auch mit einem derartigen Service-Container gekuppelt sein kann.

Die Lösung der gestellten Aufgabe besteht darin, dass
- unterflur des Werkstattgleises eine Grube eingelassen ist, deren Länge, Breite und Tiefe größer sind als die entsprechenden Abmessungen der mobilen Radsatzbearbeitungsmaschine,
- auf dem Grunde der Grube ein zweites Gleis vorgesehen ist, auf welches die mobile Radsatzbearbeitungsmaschine absenkbar ist und auf dem sie beweg- und arretierbar ist sowie
- Einrichtungen zum Überrollen durch das Eisenbahnfahrzeug vorgesehen sind, die sich längs des Werkstattgleises über die Länge der Grube erstrecken, wobei die
- Einrichtungen zum Überrollen oder Teile derselben während des Reprofilierens eines Eisenbahnradsatzes entfernbar und nach dem Reprofilieren wieder einsetzbar sind.

In einer vorteilhaften weitergehenden Ausgestaltung sind zum Entlasten der Rollen der mobilen Radsatzbearbeitungsmaschine vom Druck des Eisenbahnfahrzeuges während des Überrollens der Grube und während des Reprofilierens von Eisenbahnradsätzen Stützen vorgesehen, die zwischen dem Rahmen der mobilen Radsatzbearbeitungsmaschine und dem zweiten Gleis in der Grube angeordnet sind und auf denen die mobile Radsatzbearbeitungsmaschine ruht.

Das Kuppeln der mobilen Radsatzbearbeitungsmaschine mit einem Service-Container erfordert eine entsprechende Verlängerung der Grube. Dementsprechend erstrecken sich die Einrichtungen zum Überrollen durch das Eisenbahnfahrzeug auch über die Verlängerung der Grube, wo der Service-Container vorgesehen ist, wobei die Einrichtungen zum Überrollen auf Zwischenstützen ruhen.

Schließlich ist auch noch ein Förderer zum Entfernen von Spänen aus der Grube vorgesehen.

Nachfolgend wird die Erfindung an einem Ausführungsbeispiel näher beschrieben.

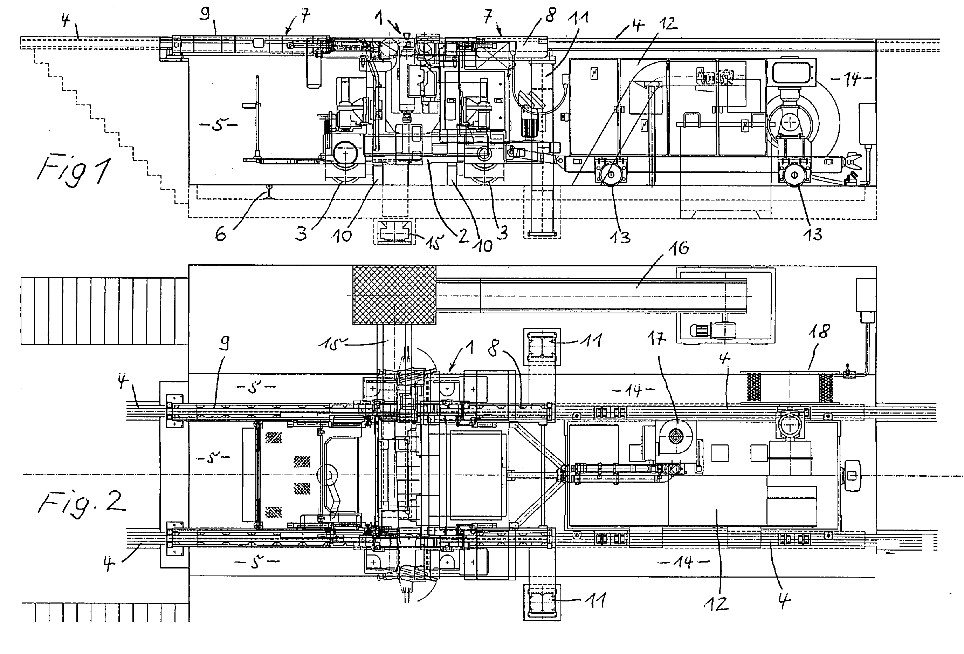

Es zeigen jeweils in verkleinertem Maßstab die
- Fig. 1 eine Seitenansicht und
- Fig. 2 eine Draufsicht der mobilen Radsatzbearbeitungsmaschine und ihres Service-Containers in einer Grube unterhalb eines Werkstattgleises.

Die mobile Radsatzbearbeitungsmaschine 1 zum Reprofilieren der Räder und/oder Bremsscheiben von Radsätzen für Eisenbahnfahrzeuge (nicht gezeigt) hat einen Rahmen 2, der auf Rädern 3 oder Rollen gelagert ist, die in einem Werkstattgleis 4 geführt sind, wodurch die mobile Radsatzbearbeitungsmaschine 1 längs des Werkstattgleises 4 verschieb- und arretierbar ist. Gemäß der Neuerung ist unterflur des Werkstattgleises 4 eine Grube 5 eingelassen, deren Länge, Breite und Tiefe größer sind als die entsprechenden Abmessungen der mobilen Radsatzbearbeitungsmaschine 1. Auf dem Grund der Grube 5 ist ein zweites Gleis 6 vorgesehen, auf welches die mobile Radsatzbearbeitungsmaschine 1 von oben her mit einem Kran (nicht gezeigt) absenkbar ist und auf dem sie beweg- und arretierbar ist. Einrichtungen 7 zum Überrollen durch das Eisenbahnfahrzeug sind vorgesehen, die sich längs des Werkstattgleises 4 über die Länge der Grube 5 erstrecken, wobei die Einrichtungen 7 zum Überrollen oder Teile 8 und 9 derselben während des Reprofilierens eines Eisenbahnradsatzes entfernbar und nach dem Reprofilieren wieder einsetzbar sind. Die Teile 8 und/oder 9 der Einrichtungen 7 zum Überrollen können zum Entfernen und Wiedereinsetzen beispielsweise seitlich aus der Verlängerung des Werkstattgleises 4 herausgeschwenkt werden.

Da die Rollen 3, auf denen der Rahmen 2 der mobilen Radsatzbearbeitungsmaschine 1 ruht, nicht für die Aufnahme von hohen Drücken geeignet sind, wie sie beispielsweise durch schwere Eisenbahnfahrzeuge ausgeübt werden, sind zwischen dem zweiten Gleis 6 und dem Rahmen 2 Stützen 10 vorgesehen, auf denen die mobile Radsatzbearbeitungsmaschine 1 während des Überrollens der Grube 5 oder während des Reprofilierens der Räder eines Radsatzes ruht. Die Stützen 10 erstrecken sich über beide Schienen des zweiten Gleises 6. Das Einfügen der Stützen 10 unterhalb des Rahmens 2 der mobilen Radsatzbearbeitungsmaschine 1 macht es erforderlich, dass die Tiefe der Grube 5 größer ist als die vertikale Höhe der mobilen Radsatzbearbeitungsmaschine 1.

Im vorliegenden Ausführungsbeispiel ist die mobile Radsatzbearbeitungsmaschine 1 mit einem Service-Container 12 gekuppelt. Auch der Service-Container 12 ruht auf Rädern 13 oder Rollen, die längs des Werkstattgleises 4 beziehungsweise des zweiten Gleises 6 verschiebbar sind. Üblicherweise hat das zweite Gleis 6 die gleiche Spurweite wie das Werkstattgleis 4. Das zweite Gleis 6 kann aber auch eine davon abweichende Spurweite aufweisen. Der Service-Container 12 ist in einer Verlängerung 14 der Grube 5 angeordnet. Etwa in der Mitte der Grube 5 und ihrer Verlängerung 14 befindet sich eine Zwischenstütze 11, auf denen einerseits das Werkstattgleis 4 und andererseits ein Teil 8 der Einrichtung 7 zum Überrollen aufgenommen werden.

Schließlich ist auch noch ein Späneförderer 15 vorgesehen, der die beim Reprofilieren anfallenden Späne seitlich unter der mobilen Radsatzbearbeitungsmaschine 1 hervorzieht und über eine Verlängerung 16 nach oben, das heißt überflur des Werkstattgleises 4, befördert. Durch den Späneförderer 15 und seine Verlängerung 16 wird die Grube 5 von Abfallstoffen entsorgt. Ein Gebläse 17 am Service-Container 12 übernimmt schließlich die Aufgabe des Absaugens von Staub, wie er üblicherweise beim Reprofilieren von Eisenbahnradsätzen anfällt. Über eine Kabeltrommel 18 wird zunächst dem Service-Container 12 und danach der mobilen Radsatzbearbeitungsmaschine 1 die notwendige Energie zugeführt.

Neben dem klassischen Reprofilieren der Räder von Radsätzen für Eisenbahnfahrzeuge ist die mobile Radsatzbearbeitungsmaschine 1 auch dazu geeignet, Bremsscheiben zu bearbeiten, die mit den Eisenbahnrädern oder Radsätzen verbunden sind.

### Bezugszeichenliste

- 1: mobile Radsatzbearbeitungsmaschine
- 2: Rahmen
- 3: Räder
- 4: Werkstattgleis
- 5: Grube
- 6: zweites Gleis
- 7: Einrichtung zum Überrollen
- 8: Teil der Einrichtung zum Überrollen
- 9: Teil der Einrichtung zum Überrollen
- 10: Stütze
- 11: Zwischenstütze
- 12: Service-Container
- 13: Räder
- 14: Verlängerung der Grube
- 15: Späneförderer
- 16: Verlängerung
- 17: Gebläse
- 18: Kabeltrommel

## Patentansprüche

1. Mobile Radsatzbearbeitungsmaschine (1) zum Reprofilieren der Räder und/oder Bremsscheiben von Radsätzen für Eisenbahnfahrzeuge, die einen Rahmen (2) hat, der auf Rädern (3) oder Rollen gelagert ist, die in einem Werkstattgleis (4) geführt sind, wodurch die mobile Radsatzbearbeitungsmaschine (1) längs des Werkstattgleises (4) verschieb- und arretierbar ist, **dadurch gekennzeichnet, dass**
- unterflur das Werkstattgleis (4) eine Grube (5) eingelassen ist, deren Länge, Breite und Tiefe größer sind als die entsprechenden Abmessungen der mobilen Radsatzbearbeitungsmaschine (1),
- auf dem Grunde der Grube (5) ein zweites Gleis (6) vorgesehen ist, auf welches die mobile Radsatzbearbeitungsmaschine (1) absenkbar ist und auf dem sie beweg- und arretierbar ist sowie
- Einrichtungen (7) zum Überrollen durch das Eisenbahnfahrzeug vorgesehen sind, die sich längs des Werkstattgleises (4) über die Länge der Grube (5) erstrecken, wobei die
- Einrichtungen (7) zum Überrollen oder Teile (8, 9) derselben während des Reprofilierens der Räder eines Eisenbahnradsatzes entfernbar und nach dem Reprofilieren wieder einsetzbar sind.

2. Maschine nach Anspruch 1, **dadurch gekennzeichnet, dass** zum Entlasten der Rollen (3) der mobilen Radsatzbearbeitungsmaschine (1) vom Druck des Eisenbahnfahrzeugs während des Überrollens der Grube (5) und während des Reprofilierens von Eisenbahnradsätzen Stützen (10) zwischen dem Rahmen (2) der mobilen Radsatzbearbeitungsmaschine (1) und dem zweiten Gleis (6) in der Grube (5) vorgesehen sind, auf denen die mobile Radsatzbearbeitungsmaschine (1) ruht.

3. Maschine nach einem der Ansprüche 1 oder 2, **dadurch gekennzeichnet, dass** die mobile Radsatzbearbeitungsmaschine (1) mit einem Service-Container (12) kuppelbar ist, der seinerseits auf Rädern (13) oder Rollen ruht, die längs des zweiten Gleises (6) in einer Verlängerung (14) der Grube (5) verschiebbar sind.

4. Maschine nach Anspruche 3, **dadurch gekennzeichnet, dass** sich die Einrichtungen (7) zum Überrollen durch das Eisenbahnfahrzeug auch über die Verlängerung (14) der Grube (5) erstrecken, wo der Service-Container (12) vorgesehen ist und auf Zwischenstützen (11) ruhen.

5. Maschine nach einem der Ansprüche 1 bis 4, **dadurch gekennzeichnet, dass** Förderer (15, 16) zum Entfernen von Spänen vorgesehen sind.

## Geänderte Patentansprüche

### Geänderte Patentansprüche gemäss Regel 86(2) EPÜ.

**1.** Radsatzbearbeitungsmaschine umfassend ein mobiles Radsatzbearbeitungsgerät(1) zum Reprofilieren der Räder und/oder Bremsscheiben von Radsätzen für Eisenbahnfahrzeuge, das einen Rahmen (2) hat, der auf Rädern (3) oder Rollen gelagert ist, die in einem Werkstattgleis (4) geführt sind, wodurch das mobile Radsatzbearbeitungsgerät (1) längs des Werkstattgleises (4) verschieb- und arretierbar ist,
**gekennzeichnet durch**
- eine Grube (5), die unterflur des Werkstattgleises (4) eingelassen ist, deren Länge, Breite und Tiefe größer sind als die entsprechenden Abmessungen des mobilen Radsatzbearbeitungsgeräts (1),
- ein zweites Gleis (6), das auf dem Grunde der Grube (5) vorgesehen ist, auf welches das mobile Radsatzbearbeitungsgerät (1) absenkbar ist und auf dem es beweg- und arretierbar ist sowie
- Einrichtungen (7) zum Überrollen **durch** das Eisenbahnfahrzeug, die sich längs des Werkstattgleises (4) über die Grube (5) erstrecken, wobei die
- Einrichtungen (7) zum Überrollen oder Teile (8, 9) derselben während des Reprofilierens der Räder eines Eisenbahnradsatzes entfernbar und nach dem Reprofilieren wieder einsetzbar sind.

**2.** Maschine nach Anspruch 1, **dadurch gekennzeichnet, dass** zum Entlasten der Rollen (3) des mobilen Radsatzbearbeitungsgeräts (1) vom Druck des Eisenbahnfahrzeugs während des Überrollens der Grube (5) und während des Reprofilierens von Eisenbahnradsätzen Stützen (10) zwischen dem Rahmen (2) des mobilen Radsatzbearbeitungsgeräts (1) und dem zweiten Gleis (6) in der Grube (5) vorgesehen sind, auf denen das mobile Radsatzbearbeitungsgerät (1) ruht.

**3.** Maschine nach einem der Ansprüche 1 oder 2,
**dadurch gekennzeichnet, dass** das mobile Radsatzbearbeitungsgerät (1) mit einem Service-Container (12) kuppelbar ist, der seinerseits auf Rädern (13) oder Rollen ruht, die längs des zweiten Gleises (6) in einer Verlängerung (14) der Grube (5) verschiebbar sind.

**4.** Maschine nach Anspruche 3, **dadurch gekennzeichnet, dass** sich die Einrichtungen (7) zum Überrollen durch das Eisenbahnfahrzeug auch über die Verlängerung (14) der Grube (5) erstrecken, wo der Service-Container (12) vorgesehen ist und auf Zwischenstützen (11) ruhen.

**5.** Maschine nach einem der Ansprüche 1 bis 4,
**dadurch gekennzeichnet, dass** Förderer (15, 16) zum Entfernen von Spänen vorgesehen sind.
